(19) Europäisches Patentamt European Patent Office Office européen des brevets

(11) **EP 3 200 149 B1**

(12) **EUROPÄISCHE PATENTSCHRIFT**

(45) Veröffentlichungstag und Bekanntmachung des Hinweises auf die Patenterteilung:
**02.09.2020 Patentblatt 2020/36**

(51) Int Cl.:
***G06T 5/00*** *(2006.01)*

(21) Anmeldenummer: **17000039.2**

(22) Anmeldetag: **10.01.2017**

(54) **VERFAHREN ZUM ERKENNEN EINES OBJEKTS IN EINEM SUCHBILD**

METHOD FOR DETECTION OF AN OBJECT IN A SEEKER IMAGE

PROCÉDÉ DE RECONNAISSANCE D'UN OBJET DANS UNE IMAGE DE RECHERCHE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.01.2016 DE 102016000873**

(43) Veröffentlichungstag der Anmeldung:
**02.08.2017 Patentblatt 2017/31**

(73) Patentinhaber: **Diehl Defence GmbH & Co. KG 88662 ÜBERLINGEN (DE)**

(72) Erfinder: **Gagel, Florian
DE - 88690 Uhldingen-Mühlhofen (DE)**

(74) Vertreter: **Diehl Patentabteilung
c/o Diehl Stiftung & Co. KG
Stephanstraße 49
90478 Nürnberg (DE)**

(56) Entgegenhaltungen:
**EP-A1- 2 466 247          EP-A1- 2 560 368
WO-A1-03/102505        US-A- 5 323 987
US-A1- 2007 009 169**

• **NEEL JOSHI ET AL: "Image Deblurring using Inertial Measurement Sensors", ACM SIGGRAPH CONFERENCE PROCEEDINGS,, 1. Januar 2010 (2010-01-01), Seiten 1-8, XP007914259,**

**Beschreibung**

Die Erfindung betrifft ein Verfahren zum Steuern eines Flugkörpers, bei dem ein Objekt in einem Suchbild, wobei das Objekt und eine Umgebung um das Objekt durch eine Optik einer Kamera aufgenommen werden.

Zum Erkennen von Fahrzeugen, beispielsweise Luftfahrzeugen, aus einer großen Entfernung werden Infrarotkameras verwendet, die eine Umgebung auf eine Infrarotsignatur durchsuchen. Um ein Objekt mit einer geringen Infrarotsignatur in einer verrauschten Umgebung identifizieren zu können, können leistungsfähige Optiken mit einer großen Eintrittsapertur verwendet werden. Ist eine kompakte Bauweise der Kamera gewünscht, so ist das Blickfeld der Kamera bei gleicher Lichtstärke kleiner und ein vorher festgelegter Scanbereich der Umgebung kann mit einer Anzahl von kleinen Bildern abgerastert werden. Bei einer hohen Anzahl von Bildern für einen Suchscan ist dieses Verfahren zeitaufwändig, sodass das Absuchen eines großen Scanbereichs lange dauert.

Aus der WO 03/102505 A1 ist ein luftgestütztes Aufklärungssystem bekannt. Das System verfügt unter anderem über ein über zwei Kardanrahmen verschwenkbares Array von Lichtsensoren, Speichermittel zum Abspeichern einer digitalen Profilkarte eines Bereichs von Interesse und eine Auswahleinheit zur aufeinander folgenden Auswahl von Teilbereichen des interessierenden Bereichs. Weiterhin verfügt das System bevorzugt über zwei inertiale Navigationssysteme, eines für das Luftfahrzeug und eines für das eigentliche Aufklärungssystem, dessen Sensoren bevorzugt auf den Kardanrahmen angeordnet sind. Mittels der Kardanrahmen werden kontinuierlich Spalten / Reihen des interessierenden Bereichs abgescannt. Sobald eine exakte Ausrichtung auf das Zentrum eines Teilbereichs erreicht wurde, beginnt die Belichtung des Arrays und ein sogenannter "zurückscannnender"-Spiegel kompensiert während dieser Integrationsperiode die kontinuierliche Scan-Bewegung der Kardanrahmen.

Aus dem Stand der Technik sind Verfahren und Vorrichtungen bekannt, die sich mit der Beseitigung von Unschärfen in Bildern auseinandersetzen:
Die EP 2 560 368 A1 offenbart eine Vorrichtung, die über eine Einrichtung zur Erzeugung von Unschärfe-Informationen basierend auf Sensordaten verfügt, die auf Kamerabewegungen beruhen. Weiterhin verfügt die Vorrichtung über eine Unschärfe-Korrektur-Einheit zur Korrektur der Unschärfe in einem aufgenommenen Bild. Es wird vorgeschlagen, das aufgenommene Bild und die Punktspreizfunktion einer FourierTransformation zu unterziehen und dann im Frequenzraum einen Teilungsvorgang mit dem aufgenommenen Bild und der Punktspreizfunktion vorzunehmen. Der Zeitschriftartikel "Image Deblurring using Inertial Measurement Sensors" von Neel Josh et al. (erschienen in ACM SIGGRAPH CONFERENCE PROCEEDINGS, 1.1.2010, S. 1 - 8) schlägt zur Beseitigung von Unschärfe in Bildern die Verwendung von Inertialsensoren vor Eine Endverbraucher-Kamera wird hierzu mit Inertialsensoren versehen, um eine Unschärfe-Funktion während einer Bildaufnahme abzuschätzen.

Aus der EP 2 466 247 A1 ist ein Verfahren zum Steuern eines Lenkflugkörpers bekannt, bei welchem eine Objektszene auf einen Detektor mit einer Vielzahl von Detektorzellen abgebildet, das erhaltene Bild ausgewertet und ein Steuersystem des Lenkflugkörpers anhand von Daten aus der Bildauswertung gesteuert wird. Um den Lenkflugkörper auch auf ein kleines und weit entferntes Ziel steuern zu können, erfolgt die Abbildung auf den Detektor neben einer verschwenkbaren Eingangsoptik über ein mehrere Linsen umfassendes Detektorobjektiv. Damit ein auf der Detektoroberfläche punktförmig abgebildetes Ziel nicht nur auf einen unsensiblen Rand einer Detektorzelle abgebildet wird, ist die Abbildung auf den Detektor so abgestimmt, dass bei Abbildung einer Punktquelle die quadratische Fläche, die symmetrisch um die Punktabbildung liegt, größer als die Bildelement-Rasterfläche eines Bildelements des Detektors ist.

Es ist eine Aufgabe der vorliegenden Erfindung, ein verbessertes Verfahren zum Steuern eines Flugkörpers, bei dem ein Objekts mit einer schwachen optischen Signatur in einem Suchbild erkannt wird, anzugeben.

Diese Aufgabe wird durch ein Verfahren gemäß den Merkmalen von Patentanspruch 1 gelöst, bei dem die Optik während der Integration eines Aufnahmebilds in der Umgebung verschwenkt wird und von einer Bildverarbeitungseinheit unter Verwendung der Punktspreizfunktion und der Schwenkbewegung der Optik das Suchbild aus dem Aufnahmebild rückberechnet wird und das Suchbild auf das Objekt durchsucht wird.

Die Erfindung geht von der Überlegung aus, dass sich die gesamte Aufnahmezeit eines Scans mit mehreren Bildern gegenüber einem üblichen Abrastern der Umgebung verringern lässt, wenn die Kameraoptik während der Integration des Aufnahmebilds nicht ruht und nur zwischen zwei Aufnahmebildern ruckartig verschwenkt wird, sondern bereits während der Integration des Aufnahmebilds in der Umgebung verschwenkt wird. Der Zeitabstand zwischen der Integration zweier hintereinander aufgenommener Bilder kann verringert werden und der Scanprozess kann beschleunigt werden. Nachteilig hierbei ist, dass die Bildsignatur des Objekts durch das Verschwenken der Optik im Aufnahmebild verschmiert wird. Diese Schwenkverschmierung kann jedoch bei bekannter Schwenkbewegung zu einem ruhenden Bild des Objekts zurückgerechnet werden. Auf diese Weise kann der durch die Schwenkbewegung entstehende Nachteil der Bildverschmierung weitgehend ausgeglichen werden und das Scanverfahren beschleunigt werden.

Zum Ausgleich der Bildverschmierung ist die Rückrechnung des verschmierten Aufnahmebilds in das verbesserte Suchbild notwendig. In diese Rückrechnung kann die durch die Punktspreizung der Optik hervorgerufene Punktbildverschmierung in einfacher Weise mit aufgenommen werden. Hierdurch wird das Bild des Objekts geschärft und kann auch bei einer schwachen Signatur besser im Suchbild erkannt werden. Die Kombination der Punktspreizfunktion und der Schwenkbewegung der Optik können bei der Rückberechnung in einer einzigen inversen Faltung Berücksichtigung finden, sodass die Berechnung sehr effizient und das Ergebnis durch die Kombination sehr vorteilhaft ist. Durch die doppelte Rückrechnung der Punktspreizfunktion und der Schwenkbewegung können auch Objekte mit schwacher Bildsignatur vor einem verrauschten Hintergrund in der Umgebung erkannt werden.

Entsprechend der Erfindung werden mehrere Aufnahmebilder unmittelbar hintereinander während einer kontinuierlichen, also ununterbrochenen Schwenkbewegung der Optik aufgenommen, die Optik schwenkt also während der Integration eines jeden Aufnahmebilds in der Umgebung. Die Integration findet während einer Integrationszeit statt, also von einem Integrationsbeginn bis zu einem Integrationsende. Die Integrationszeit ist die Integrationszeit der Bildzellen der Kamera beziehungsweise eines Detektors der Kamera für ein Aufnahmebild und kann analog zu einer Belichtungszeit eines Bilds gesehen werden. Die Integrationszeit kann fest voreingestellt sein oder in Abhängigkeit einer Leuchtstärke der Umgebung gewählt werden, analog zu einer automatischen Belichtungseinstellung.

Zweckmäßigerweise ist die Kamera eine Infrarotkamera und das Aufnahmebild wird insbesondere ausschließlich im infraroten Spektrum aufgenommen. Besonders geeignet ist das Verfahren zur Suche eines Fahrzeugs, insbesondere eines Luftfahrzeugs in der Umgebung, sodass das Objekt ein Fahrzeug beziehungsweise Luftfahrzeug ist. Die Erfindung betrifft en Verfahren zum Steuern eines Flugkörpers, wobei die Kamera Bestandteil eines Suchkopfs des Flugkörpers und/oder eines Startgerätes des Flugkörpers ist. Das Suchbild wird insbesondere vor einem Start des Flugkörpers erstellt und das Objekt im Suchbild erkannt. Das Objekt im Suchbild beziehungsweise dessen Position im Suchbild wird entsprechend der Erfindung markiert, sodass das Objekt hierdurch als Ziel des Flugkörpers markiert ist. Der Flugkörper kann das Objekt insbesondere selbständig ansteuern.

In einer vorteilhaften Ausführungsform der Erfindung wird zur Rückberechnung der Faltungskernel der Punktspreizfunktion und der Punktverschmierung durch die Schwenkbewegung verwendet, wobei das Suchbild insbesondere durch inverse Faltung mit dem Faltungskernel berechnet wird. Der Faltungskernel kann hierbei ein Integral der Punktspreizfunktion über die Ortskurve der Verschwenkung enthalten. Die inverse Faltung findet zweckmäßigerweise im Frequenzraum statt.

Zum Auffinden des Objekts in einer großflächigen Umgebung ist erfindungsgemäß vorgesehen, dass ein Suchraum mit einer Abfolge von Aufnahmebildern vollständig überdeckt wird, die während eines kontinuierlichen Verschwenkens der Kamera aufgenommen werden. Das Verschwenken kann in S-Richtung von mehreren neben- oder übereinanderliegenden Bildreihen erfolgen. Die Verschwenkung muss hierbei nicht in der Verschwenkgeschwindigkeit kontinuierlich sein, sondern kann während einer Bildaufnahme, also während der Integration eines Aufnahmebilds beschleunigt werden.

Zum Verringern der Wahrscheinlichkeit einer fehlerhaften Identifizierung eines Objekts im Suchbild ist es vorteilhaft, wenn das Objekt, also ein Punkt oder Gebilde im Suchbild, von mehreren Suchbildern abgebildet wird. Wird jeder Punkt beispielsweise eines Suchraums von zumindest zwei Suchbildern abgedeckt, so kann das Vorhandensein eines in einem ersten Suchbild entdeckten Objekts im zweiten Suchbild überprüft werden. Hierfür ist es vorteilhaft, wenn die Schwenkbewegung während der Bildaufnahme, also während der Integration des Aufnahmebilds, maximal 50 % des Bilddurchmessers des Suchbilds, insbesondere des Aufnahmebilds, in der Schwenkrichtung beträgt, also beispielsweise den Field of View (FOV) der Kamera in dem Aufnahmebild. Um dennoch den Suchraum möglichst zügig durchsuchen zu können, ist es vorteilhaft, wenn die Schwenkbewegung mindestens 10 %, insbesondere mindestens 30 % des Bilddurchmessers in der Schwenkrichtung beträgt.

Je nachdem, ob die Punktspreizfunktion der Optik kontinuierlich über die gesamte Bildfläche bzw. FOV ist, sind verschiedene Rückberechnungsverfahren vorteilhaft. Bei konstanter Punktspreizfunktion ist die Rückberechnung mittels Wiener-Filter besonders vorteilhaft. Die spektrale Dichte und/oder Verteilung des Rauschens kann beim Wiener-Filter in einfacher Weise berücksichtigt werden, sodass die inverse Faltung robuster gegen Rauschen ist. Insbesondere bei nicht kontinuierlicher Punktspreizfunktion ist eine Rückberechnung mittels Iterationsverfahren vorteilhaft. Möglich und sinnvoll ist beispielsweise die Landweber-Iteration, ein Iterationsverfahren nach Richardson-Lucy, van Cittert oder Tikhonov-Miller. Die aufgezählten Regularisierungsverfahren weisen eine geringe Fehleranfälligkeit der inversen Faltung gegen Rauschen aus der Umgebung des Objekts im Bild auf.

Insbesondere bei sehr schwach leuchtenden Objekten spielt das Hintergrundrauschen im Aufnahmebild eine große Rolle, sodass das Objekt umso besser gefunden werden kann, je mehr Details über das Rauschen bekannt sind. Eine solche Verbesserung des Erkennungsverfahrens kann erreicht werden, wenn ein von der Optik verursachtes Rauschen im Frequenzraum als Parameter bei der Rückberechnung verwendet wird. Das Rauschen der Optik kann vorab vermessen und als Parameter des Wiener Filters oder eines Iterationsverfahrens verwendet werden.

Mit gleichem Vorteil wird ein von der Ausleseelektronik der Kamera verursachtes Ausleserauschen als Parameter bei der Rückberechnung verwendet. Auch möglich und vorteilhaft ist die Verwendung eines Detektorrauschens der Kamera als Parameter bei der Rückberechnung. Bei einer Infrarotaufnahme ist insbesondere das thermische Rauschen des Detektors von Bedeutung und wird zweckmäßigerweise als Parameter bei der Rückberechnung verwendet. Ein solcher Parameter kann als Parameter des Wiener Filters oder eines Iterationsverfahrens verwendet werden.

Es kann vorkommen, dass ein Suchen eines Objekts in der Umgebung erfolglos verlief, beispielsweise weil das Objekt noch zu weit entfernt ist oder die Hintergrundstrahlung zu stark ist. Ist nun bei einer zweiten Suche ein Parameter des realen Hintergrundrauschens bekannt, beispielsweise Infrarotstrahlung des um das Objekt herum mit aufgenommenen Himmels, so kann dieser Parameter bei der Rückberechnung verwendet werden, sodass dessen Störung in der nachfolgenden Suche verringert wird. Entsprechend wird vorgeschlagen, dass ein aus einer früheren Bildaufnahme ermitteltes Hintergrundrauschen der Umgebung oder Parameter daraus als Parameter bei der Rückberechnung verwendet wird, beispielsweise als Parameter des Wiener Filters oder eines Iterationsverfahrens.

Bei einem Scan über einen größeren Raum einer Umgebung ist es vorteilhaft, wenn das Hintergrundrauschen beziehungsweise ein Parameter davon ortsabhängig ermittelt wird, insbesondere über eine Folge von Aufnahmebildern. Um bei einem gegenüber dem Hintergrund unbeweglichen Objekt durch die ortsabhängige Berücksichtigung des Hintergrundrauschens nicht gemessene objektspezifische Strahlung bei der Rückberechnung zu unterdrücken, ist es vorteilhaft, wenn das Hintergrundrauschen über zumindest eine Teilfläche eines Aufnahmebilds gemittelt ermittelt und bei der Rückberechnung berücksichtigt wird.

Die Erfindung ist außerdem gerichtet auf eine Vorrichtung zum Erkennen und Markieren eines Objekts in einem Suchbild für die Steuerung eines Flugkörpers gemäß den Merkmalen von Patentanspruch 10. Die Vorrichtung umfassteine Kamera, die eine Optik, einen Detektor und einen Antrieb zum Verschwenken der Optik in der Umgebung aufweist. Es wird vorgeschlagen, dass die Vorrichtung weiterhin eine Schwenkerfassungseinheit und eine Bildverarbeitungseinheit aufweist, die dazu vorbereitet ist, eine Bildaufnahme während eines angetriebenen Verschwenkens der Optik zu steuern und mittels der Schwenkerfassungseinheit die Verschwenkung während der Bildaufnahme zu erfassen, wobei die Bildverarbeitungseinheit dazu vorbereitet ist, unter Verwendung der Punktspreizfunktion und der erfassten Schwenkbewegung der Optik ein Suchbild aus dem aufgenommenen Aufnahmebild rückzuberechnen und das Suchbild auf das Objekt zu durchsuchen.

Die bisher gegebene Beschreibung vorteilhafter Ausgestaltungen der Erfindung enthält zahlreiche Merkmale, die in einigen abhängigen Ansprüchen zu mehreren zusammengefasst wiedergegeben sind. Diese Merkmale können jedoch zweckmäßigerweise auch einzeln betrachtet und zu sinnvollen weiteren Kombinationen zusammengefasst werden, insbesondere bei Rückbezügen von Ansprüchen, sodass ein einzelnes Merkmal eines abhängigen Anspruchs mit einem einzelnen, mehreren oder allen Merkmalen eines anderen abhängigen Anspruchs kombinierbar ist. Außerdem sind diese Merkmale jeweils einzeln und in beliebiger geeigneter Kombination sowohl mit dem erfindungsgemäßen Verfahren als auch mit der erfindungsgemäßen Vorrichtung gemäß den unabhängigen Ansprüchen kombinierbar. So sind Verfahrensmerkmale auch als Eigenschaften der entsprechenden Vorrichtungseinheit gegenständlich formuliert zu sehen und funktionale Vorrichtungsmerkmale auch als entsprechende Verfahrensmerkmale.

Die oben beschriebenen Eigenschaften, Merkmale und Vorteile dieser Erfindung sowie die Art und Weise, wie diese erreicht werden, werden klarer und deutlicher verständlich in Zusammenhang mit der folgenden Beschreibung der Ausführungsbeispiele, die im Zusammenhang mit den Zeichnungen näher erläutert werden. Die Ausführungsbeispiele dienen der Erläuterung der Erfindung und beschränken die Erfindung nicht auf die darin angegebene Kombination von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und/oder mit einem beliebigen der Ansprüche kombiniert werden.

Es zeigen:

FIG 1    eine Vorrichtung zum Erkennen eines schwach leuchtenden Objekts mit einer Kamera, die einen Suchraum mit vier Reihen von nebeneinander liegenden Aufnahmebildern abrastert, aus denen vier Reihen von Suchbildern erzeugt werden,

FIG 2    drei Aufnahmebilder in einem Raum-Zeit-Ablaufschema und

FIG 3    eine Bewegung der Blickrichtung der Optik der Kamera aus FIG 1 während der Aufnahme eines Aufnahmebilds mit einer von ihr erzeugten Punktbildverbreiterung in einer schematischen Darstellung.

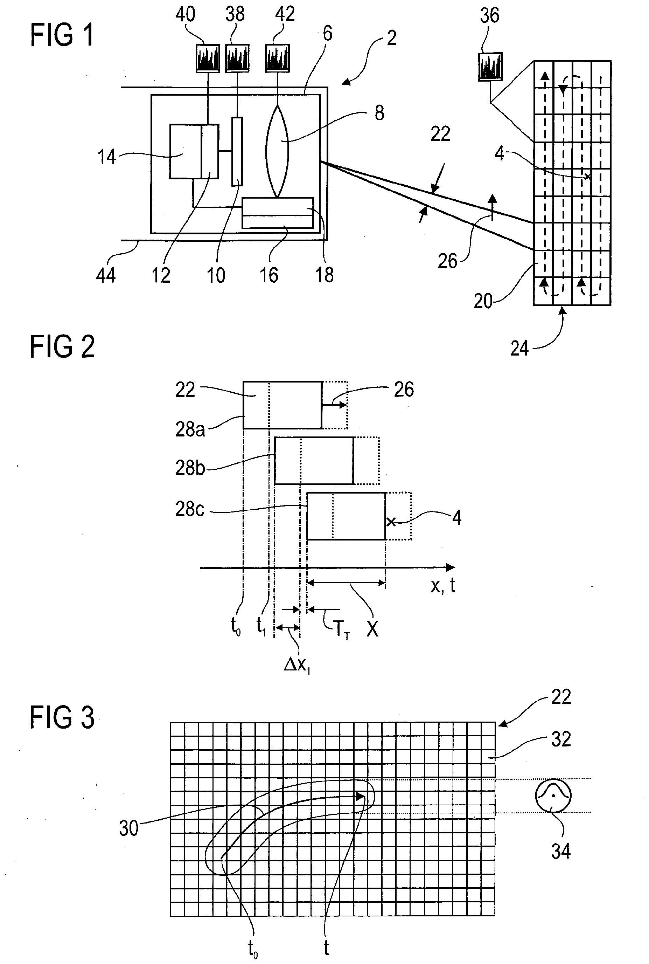

FIG 1 zeigt eine Vorrichtung 2 zum Erkennen eines Objekts 4, die eine Kamera 6 zum Aufnehmen des Objekts 4 umfasst. Die Kamera 6 ist ausgestattet mit einer Optik 8, einem Detektor 10, einer Ausleseelektronik 12 und einer Bildverarbeitungseinheit 14. Die Kamera 6 ist eine Infrarotkamera, sodass die Optik 8 eine Infrarotoptik und der Detektor 10 ein Infrarotdetektor ist, beispielsweise ein Bolometer. Der Detektor 10 ist außerdem ein Matrixdetektor mit einer Vielzahl von Detektorelementen zur bildauflösenden Darstellung des Objekts 4 und dessen Umgebung.

Die Kamera 6 dient zum Scannen eines Suchraums 24, beispielsweise eines Halbraums einer Umgebung mit 90° Elevations- und 180° Azimut-Ausdehnung oder eines Teils davon, mit einer Vielzahl von Suchbildern. Zum Abscannen der Umgebung ist die Kamera 6 insgesamt oder nur deren Optik 8 schwenkbar, wobei die Verschwenkung in der Umgebung erfasst werden kann, sodass die momentane Blickrichtung der Kamera 6 beziehungsweise von deren Optik 8 bekannt ist. Zum Verschwenken von zumindest der Optik 8 in der Umgebung umfasst die Vorrichtung 2 - oder in dem in FIG 1 gezeigten Ausführungsbeispiel konkret die Kamera 6 - einen Antrieb 16 zum Verschwenken der Kamera 6 beziehungsweise im gezeigten Ausführungsbeispiel nur der Optik 8. Zum Erfassen der Schwenkbewegung ist eine Schwenkerfassungseinheit 18 vorhanden, die die momentane Blickrichtung der Kamera 6 beziehungsweise der Optik 8 erfasst, beispielsweise ausgehend von einer bekannten Referenzrichtung. Zum Zuordnen von Suchbildern 20 zu Richtungen im Suchraum 24 ist die Schwenkerfassungseinheit 18 signaltechnisch mit der Bildverarbeitungseinheit 14 verbunden, sodass ein aufgenommenes Bild im Suchraum 24 positioniert werden kann beziehungsweise dessen Position im Suchraum 24 bekannt ist. Die Suchbilder 20, beispielsweise mehrere Reihen von nebeneinanderliegenden oder übereinanderliegenden Suchbildern 20, mit denen insgesamt der Suchraum 24 vollständig abgedeckt ist, können dadurch wie in eine Bildtapete des Suchraums 24 eingefügt werden.

Bei dem in FIG 1 dargestellten Ausführungsbeispiel rastert das in FIG 1 schematisch angedeutete Blickfeld 22, auch Field of View (FOV) genannt, den gesamten Suchraum 24 Bild für Bild ab. Hierfür wird das Blickfeld 22 der Kamera 6 im Suchraum 24 verschwenkt, wie durch den gestrichelten S-förmigen Pfeil in FIG 1 dargestellt ist. Der Suchraum 24 wird hierdurch mit einer Vielzahl von einander überdeckenden Aufnahmebildern, aus denen später einander überdeckende Suchbilder 20 erzeugt werden, vollständig abgedeckt. Die momentane Schwenkrichtung 26, die der Richtung des gestrichelten Pfeils in Abhängigkeit von der momentanen Stellung des Blickfelds 22 im Suchraum 24 ist, ist in FIG 1 durch einen kleinen durchgezogenen Pfeil dargestellt.

FIG 2 zeigt in einer schematischen Darstellung drei Aufnahmebilder 28a, 28b, 28c, aus denen jeweils ein Suchbild 20 generiert wird. Es ist im Folgenden zunächst das erste Suchbild 28a betrachtet, dessen Integration zum Zeitpunkt $t_0$ beginnt. Zum Zeitpunkt $t_0$ beginnt die Bildaufnahme oder die Belichtungszeit des ersten Aufnahmebilds 28a. Das Blickfeld 22, also der Bildausschnitt im Suchraum 24, der durch das erste Aufnahmebild 28a abgedeckt wird, ist in FIG 2 durch ein durchgezogenes Rechteck gekennzeichnet. Während der Bildintegration wird die Optik 8 beziehungsweise die Kamera 6 im Suchraum 24 kontinuierlich verschwenkt. Am Endzeitpunkt $t_1$ der Integration hat sich das Blickfeld 22 in Schwenkrichtung 26 um die Strecke $\Delta x_1$ weiterbewegt. Im gezeigten Ausführungsbeispiel wird das Blickfeld 22 der Kamera 6 während der Aufnahme der drei Aufnahmebilder 28 kontinuierlich und konstant verschwenkt, sodass die Integrationszeit $T_I = t_1 - t_0$ der Verschwenkstrecke $\Delta x_1$ entspricht. Es ist jedoch auch möglich, dass die Verschwenkung des Blickfelds 22 der Kamera 6 innerhalb der Integrationszeit beschleunigt wird, sodass Zeit und Raum nicht linear zueinander sind.

Nach einer Totzeit $T_T$, während der die Detektorelemente des Detektors 10 ausgelesen werden und diese somit nicht Strahlung auswertbar detektieren, beginnt die Aufnahme des zweiten Aufnahmebilds 28b. Das Aufnahmebild 28b überdeckt das Aufnahmebild 28a um mehr als die Hälfte. In FIG 2 sind drei Aufnahmebilder 28 lediglich der besseren Darstellbarkeit untereinander gezeigt. Real sind sie jedoch in Schwenkrichtung 26 nebeneinander und einander überdeckend angeordnet, sodass der obere Rand aller Aufnahmebilder 28 zusammen eine gerade Linie bildet. Es ist zu sehen, dass auch das dritte Aufnahmebild 28c das erste Aufnahmebild 28a noch teilweise überdeckt. Zwei benachbarte Aufnahmebilder 28 überdecken einander mehr als 50 % und weniger als 90 %, im gezeigten Ausführungsbeispiel 55 %. Die Schwenkbewegung während der Integration eines Aufnahmebilds 28 beträgt 40 % des Bilddurchmessers in Schwenkrichtung 26, also der Bildlänge des Aufnahmebilds 28 in Schwenkrichtung 26.

Anhand des Objekts 4, das in FIG 2 beispielhaft in das dritte Aufnahmebild 28c während der Aufnahme beziehungsweise Integration einwandert, wird deutlich, dass jeder Suchraumpunkt über eine Mehrzahl von Aufnahmebildern 28 wandert, also in jedem der Mehrzahl der Aufnahmebilder 28 in Schwenkrichtung 26 verschmiert aufgenommen ist. Bei dem Ausführungsbeispiel aus FIG 2 erscheint jeder Punkt, genauso wie das Objekt 4, in zumindest drei Aufnahmebildern 28, wobei die Verschmierstrecke in zumindest einem Aufnahmebild 28b vollständig erhalten ist und in den benachbarten Aufnahmebildern 28a und 28c zumindest teilweise enthalten ist.

Aus jedem Aufnahmebild 28 wird ein Suchbild 20 berechnet. Auch die Suchbilder 20 überdecken einander innerhalb des Suchraums 24 entsprechend der Aufnahmebilder 28. Zur Berechnung des Suchbilds 20 wird die Verschmierung eines Punktobjekts in den Aufnahmebildern 28, verursacht durch die Verschwenkung in Schwenkrichtung 26 während der Bildintegration, derart zurückgerechnet, dass ein Punktobjekt im Suchbild 20 als Punkt dargestellt ist. Dies wird im Folgenden anhand der Darstellung aus FIG 3 erläutert.

Bei der Rückberechnung eines Aufnahmebilds 28 in ein Suchbild 20 wird der gesamte Bildraum eines Aufnahmebilds 28 im Suchbild 20 berücksichtigt. Der Bildraum eines Suchbilds 20 hat insofern die Größe des Blickfelds 22, das der Größe des Aufnahmebilds gleicht, zuzüglich des durch die Verschwenkung des Blickfelds 22 zusätzlich überdeckten Raums, der in FIG 2 durch den gepunkteten zusätzlichen Raum rechts vom Blickfeld 22 dargestellt ist. Auch wenn das Objekt 4 im dritten Aufnahmebild 28 zum Zeitpunkt $t_0$, also zum Beginn der Bildaufnahme beziehungsweise Bildintegration, noch nicht im Blickfeld 22 sichtbar ist, so wandert das Objekt 4 während des Verschwenkens in das Blickfeld 22, also das Aufnahmebild 28, ein, das Bild des Objekts 4 wandert in dem Fall von rechts in das Blickfeld 22 ein. Es ist somit auf der rechten Seite des Bildfelds des Suchbilds 20 vorhanden beziehungsweise abgebildet.

FIG 3 zeigt den Schwenkvektor 30 der Schwenkbewegung in Schwenkrichtung 26, die in der Darstellung aus FIG 3 eine gekrümmte Linie ist, beispielsweise wie an den Umkehrbereichen des gestrichelten Pfeils aus FIG 1. Vereinfacht dargestellt ist ein Blickfeld 22 mit einer Matrix aus Bildpunkten 32 beziehungsweise Pixeln des Detektors 10. Durch eine inverse Faltung des Aufnahmebilds 28 mit dem Schwenkvektor 30 kann aus dem Aufnahmebild 28 mit dem entsprechend des Schwenkvektors 30 verschmierten Punktbild ein Suchbild 20 erzeugt werden, in dem das Punktobjekt punktförmig abgebildet ist.

Die Suchbilder 20 überdecken einander mehr als die kleineren Aufnahmebilder 28 sich überdecken. Der Bildraum eines Aufnahmenbilds 28 entspricht einem im Suchraum 24 ruhenden Teilbereich des Suchraums 24, der vom Blickfeld 22 im Laufe einer Integrationszeit beziehungsweise Aufnahmeperiode überdeckt wird. Er ist größer als das Aufnahmebild 28 selbst. Jeder Bildpunkt 32 eines Suchbilds 20 ruht daher im Suchraum 24 und wird von einer Anzahl von Pixeln des Aufnahmebilds 28 überdeckt. Bildpunkte 32 und Pixel beziehungsweise Bildelemente des Detektors 10 sind gleich groß und zueinander äquivalent. Aus denjenigen Pixeln beziehungsweise Daten der Detektorelemente, die einen statischen Bildpunkt überdeckt beziehungsweise überfahren haben, wird der Bildpunkt 32 des Suchbilds 20 berechnet, wobei bei der Aufweitung durch die Punktspreizung 34 auch seitlich benachbarte Detektorelemente beziehungsweise Pixel des Aufnahmbilds 28 berücksichtigt werden. Aus diesen wird eine Rückberechnung durch die inverse Faltung, beispielsweise mittels Blurr-Kernel, der Inhalt des Bildpunkts 32 berechnet, im einfachsten Fall seine Helligkeit beziehungsweise Grauwertsättigung.

Die Kamera 6 und insbesondere deren Optik 8 erzeugt Abbildungsfehler, durch die ein Punktobjekt flächig verschmiert im Aufnahmebild 28 abgebildet wird. Solche Abbildungsfehler können in einer Punktspreizfunktion wiedergegeben werden, die angibt, wie ein Punktbild in x-y-Richtung zweidimensional flächig verschmiert angezeigt wird. Die Punktspreizfunktion, auch Point Spread Function (PSF) genannt, gibt insofern die Punktspreizung 34 an, mit der ein Punktobjekt beziehungsweise Punktbild gefaltet werden muss, um das im Aufnahmebild 28 verschmierte Punktobjekt zu erhalten, das im Aufnahmebild 28 entsprechend der Punktspreizung 34 aufgeweitet und verschmiert dargestellt ist. In FIG 3 ist die Punktspreizung 34 angedeutet mit einem Punkt und einer Punktaufweitung, die durch eine Gaußkurve stilisiert ist. Hierdurch wird ein Punktobjekt wie durch den Kreis schematisiert wiedergegeben ist, aufgeweitet und verschmiert dargestellt.

Auch diese Punktspreizung 34 kann durch eine inverse Faltung rückberechnet werden, sodass optische Fehler der Kamera 6 jedenfalls teilweise und überwiegend weitgehend durch die Rückberechnung eliminiert werden. Ein Punktobjekt wird hierdurch mit einer kleineren Verschmierung im Suchbild 20 abgebildet, als im Aufnahmebild 28. Durch die Schwenkbewegung der Kamera 6, angedeutet durch den Schwenkvektor 30, findet eine doppelte Verschmierung statt, nämlich durch die Punktspreizung und durch die Verschwenkung. Bei der Rückberechnung sind daher beide Faktoren zu berücksichtigen. Zur Rückberechnung wird daher der Faltungskernel der Punktspreizfunktion und der Punktverschmierung durch die Schwenkbewegung verwendet. Das Suchbild 20 wird durch inverse Faltung mit dem Faltungskernel berechnet. In einfacher Form kann der Faltungskernel als Blurr-Kernel angegeben werden als:

$$K(\vec{x}, \vec{y}) = \frac{1}{t}\int \sigma(\vec{s}(\tau) + \vec{x} - \vec{y})d\tau$$

K: Blurr-Kernel,
t: Zeit,
$\sigma = \sigma(\vec{x})$: Punktspreizfunktion,
x, y: Koordinaten der Verschwenkung zum Zeitpunkt $t_0$, also zu Beginn des Schwenkvektors 30 bzw. zu Beginn der Integration,
s = s (t): Scanbewegung entsprechend dem Schwenkvektor 30.

Ist die Punktspreizfunktion über das gesamte zweidimensionale Blickfeld 22 gleichmäßig, wie es hier durch das verhältnismäßig kleine Blickfeld 22 der Kamera 6 beispielhaft der Fall ist, so kann zur Rückberechnung der Wiener-Filter verwendet werden. Eine Anwendung des Wiener-Filters ist die sogenannte Wiener-Dekonvolution, mit dem ein Bildrauschen in der Entfaltung berücksichtigt werden kann. Bei der Erkennung von insbesondere einem nur schwach leuchtenden Objekt 4 spielt das Bildrauschen im Hintergrund des Objekts 4 eine große Rolle. Das Objekt 4 hebt sich in seiner Signatur nur wenig vom Bildhintergrund ab, dessen Rauschen also das Objekt 4 im Aufnahmebild 28 weitgehend überdeckt. Mit dem Wiener-Filter kann der Einfluss von Rauschen im Frequenzraum bei der Entfaltung verringert werden, sodass seine Anwendung bei einem schlechten Signal-Rausch-Verhältnis vorteilhaft ist. In den Wiener-Filter beziehungsweise die Wiener-Dekonvolution kann die mittlere spektrale Leistungsdichte des Rauschens in Abhängigkeit von der Frequenz im Frequenzraum einbezogen werden. Bei der Rückberechnung können insofern neben der Punktspreizfunktion und dem Schwenkvektor 30 als dritter Faktor das Rauschen einbezogen und rückberechnet werden. Hierdurch kann die Bildqualität des Objekts 4 im Suchbild 20 weiter verbessert werden.

Ein Rauschen im Bild kann mehrere Ursachen haben. Die am meisten gewichtete Ursache wird in der Regel das Hintergrundrauschen, also das Rauschen tatsächlicher Hintergrundstrahlung in der Umgebung des Objekts 4, sein. In FIG 1 ist dieses Hintergrundrauschen 36 symbolisch dargestellt. In einem ersten Scan des Suchraums 24 wird aus den Aufnahmebildern 28 das Hintergrundrauschen ortsabhängig über eine Folge von Aufnahmebildern 28 ermittelt, im gezeigten Ausführungsbeispiel aus FIG 1 über die Fläche von einer Mehrzahl von Suchbildern 20, wobei der Übersichtlichkeit halber in FIG 1 auf eine Überdeckung der Suchbilder 20 verzichtet wurde und nur eine Folge von drei Suchbildern 20 als Ermittlungsraum des ortsabhängigen Hintergrundrauschens dargestellt sind. Ebenfalls möglich wäre ein Ermittlungsraum von m x n Suchbildern 20 beziehungsweise Aufnahmebildern 28, im gezeigten Fall 3 x 4 Bilder 20, 28. Dieses Hintergrundrauschen 36 kann bei einem nachfolgenden Scan des gleichen Ermittlungsbereichs als Parameter bei der Rückberechnung, beispielsweise mittels Wiener-Dekonvolution, berücksichtigt werden, sodass ein eventuell vorhandenes Objekt 4 dort sichtbarer zutage tritt.

Eine weitere nicht zu vernachlässigende Größe im Rauschen stellt das Detektorrauschen 38 des Detektors 10 dar. Auch das Detektorrauschen 38 kann in vorhergehenden Bildern ermittelt werden und als Parameter bei der Rückberechnung verwendet werden, sodass der Störfaktor durch das Detektorrauschen 38 bei der Rückberechnung der Aufnahmebilder 28 in die Suchbilder 20 verringert wird. Da auch die Ausleseelektronik 12 ein Ausleserauschen 40 verursachen kann, ist es vorteilhaft, auch das Ausleserauschen 40 als Parameter bei der Rückberechnung zu verwenden. Das Gleiche kann auch für eine von der Optik 8 verursachte Störung durch ein Optikrauschen 42 gelten, sodass auch dessen Berücksichtigung bei der Rückberechnung vorteilhaft ist.

In einer möglichen Anwendung der Erfindung ist die Vorrichtung 2 Teil eines Suchkopfs eines Flugkörpers 44. Der Suchkopf umfasst die relativ zu einer Außenhaut des Flugkörpers 44 schwenkbare Optik 8, mit der Suchraum 24 vor einem Start des Flugkörpers 44 Bild für Bild abgescannt werden kann. Wird das Objekt 4 im Suchraum 24 erkannt, kann dieses beziehungsweise dessen Position im Suchraum 24, einem Suchbild 20 und/oder einer Bildtapete markiert werden und somit als Ziel erfasst werden. Der Flugkörper 44 kann anschließend gestartet werden und fliegt selbständig auf das Ziel beziehungsweise das Objekt 4 zu.

Bezugszeichenliste

2        Vorrichtung
4        Objekt
6        Kamera
8        Optik
10        Detektor
12        Ausleseelektronik
14        Bildverarbeitungseinheit
16        Antrieb
18        Schwenkerfassungseinheit
20        Suchbild
22        Blickfeld
24        Suchraum
26        Schwenkrichtung
28        Aufnahmebild
30        Schwenkvektor
32        Punktbild
34        Punktspreizung
36        Hintergrundrauschen
38        Detektorrauschen
40        Ausleserauschen
42        Optikrauschen
44        Flugkörper
$t_i$        Zeitpunkt
$\Delta x_i$        Strecke
$T_I$        Integrationszeit
$T_T$        Totzeit
X        Bildlänge

**Patentansprüche**

1. Verfahren zum Steuern eines Flugkörpers (44), bei dem ein Objekt (4) in einem Suchbild (20) erkannt wird, wobei

 a) das Objekt (4) und eine Umgebung um das Objekt (4) durch eine über einen Antrieb (16) verschwenkbare Optik (8) einer Kamera (6) aufgenommen werden, welche Bestandteil eines Suchkopfs des Flugkörpers (44) oder eines Startgeräts des Flugkörpers (44) ist,
 b) ein Suchraum (24) mit einer Abfolge von unmittelbar hintereinander aufgenommenen Aufnahmebildern (28) vollständig überdeckt wird, die während eines kontinuierlichen Verschwenkens der Optik (8) aufgenommen werden, derart dass die Optik (8) während der Integration eines jeden Aufnahmebilds (28) in der Umgebung verschwenkt wird,
 c) von einer Bildverarbeitungseinheit (14) unter Verwendung der Punktspreizfunktion und unter Verwendung der von einer Schwenkerfassungseinheit (18) erfassten Schwenkbewegung der Optik (8) Suchbilder (20) aus den Aufnahmebildern (28) rückberechnet und die Suchbilder (20) auf das Objekt (4) durchsucht werden und bei Erkennen des Objekts (4) dieses in dem entsprechenden Suchbild (20) als Ziel des Flugkörpers (44) markiert wird.

2. Verfahren nach Anspruch 1,

wobei zur Rückberechnung der Faltungskernel der Punktspreizfunktion und der Punktverschmierung durch die Schwenkbewegung verwendet wird und das Suchbild (20) durch inverse Faltung mit dem Faltungskernel berechnet wird.

3. Verfahren nach Anspruch 1 oder 2,
   wobei die Schwenkbewegung während der Integration des Aufnahmebilds (28) mindestens 10% und höchstens 50% des Bilddurchmessers in der Schwenkrichtung (26) beträgt.

4. Verfahren nach einem der vorhergehenden Ansprüche,
   wobei bei der Rückberechnung der Wiener-Filter verwendet wird.

5. Verfahren nach einem der vorhergehenden Ansprüche,
   wobei ein von der Optik (8) verursachtes Rauschen (42) im Frequenzraum als Parameter bei der Rückberechnung verwendet wird.

6. Verfahren nach einem der vorhergehenden Ansprüche,
   wobei ein von der Ausleseelektronik (12) der Kamera (6) verursachtes Ausleserauschen (40) als Parameter bei der Rückberechnung verwendet wird.

7. Verfahren nach einem der vorhergehenden Ansprüche,
   wobei ein Detektorrauschen (38) der Kamera (6) als Parameter bei der Rückberechnung verwendet wird.

8. Verfahren nach einem der vorhergehenden Ansprüche,
   wobei ein aus einer früheren Bildaufnahme ermitteltes Hintergrundrauschen (36) der Umgebung als Parameter bei der Rückberechnung verwendet wird.

9. Verfahren nach Anspruch 8,
   wobei das Hintergrundrauschen (36) ortsabhängig über eine Folge von Aufnahmebildern (28) ermittelt wird.

10. Vorrichtung (2) zum Erkennen und Markieren eines Objekts (4) in einem Suchbild (20) für die Steuerung eines Flugkörpers (44) mit

    a) einer Kamera (6), welche Bestandteil eines Suchkopfs des Flugkörpers (44) oder eines Startgeräts des Flugkörpers (44) ist, aufweisend eine Optik (8), einen Detektor (10) und einen Antrieb (16) zum kontinuierlichen Verschwenken der Optik (8) in einer Umgebung zur vollständigen Überdeckung eines Suchraums (24) mit einer Abfolge von unmittelbar hintereinander aufgenommenen Aufnahmebildern (28) derart, dass die Optik (8) während der Integration eines jeden Aufnahmebilds (28) in der Umgebung verschwenkt wird,
b) einer Schwenkerfassungseinheit (18) und
c) einer Bildverarbeitungseinheit (14), die dazu vorbereitet ist, eine Bildaufnahme eines Aufnahmebilds (28) während des angetriebenen Verschwenkens der Optik (8) zu steuern und mittels der Schwenkerfassungseinheit (18) die Verschwenkung während der Bildaufnahme des Aufnahmebilds (28) zu erfassen, und die dazu vorbereitet ist, unter Verwendung der Punktspreizfunktion und unter Verwendung der von der Schwenkerfassungseinheit (18) erfassten Schwenkbewegung der Optik (8) ein Suchbild (20) aus dem aufgenommenen Aufnahmebild (28) rückzuberechnen und das Suchbild (20) auf das Objekt (4) zu durchsuchen und bei Erkennen des Objekts (4) dieses in dem Suchbild (20) als Ziel des Flugkörpers (44) zu markieren.

## Claims

1. Method for controlling a missile (44) in which an object (4) is identified in a search image (20), wherein

   a) the object (4) and surroundings around the object (4) are recorded by an optics unit (8), swivellable by way of a drive (16), of a camera (6) that is a constituent part of a seeker head of the missile (44) or of a start-up device of the missile (44),
   b) a search space (24) is completely covered by a sequence of recorded images (28) recorded immediately in succession, which are recorded during continuous swivelling of the optics unit (8) in such a way that the optics unit (8) is swivelled in the surroundings during the integration of each recorded image (28),
   c) search images (20) are back calculated from the recorded images (28) using the point spread function and using the swivelling movement of the optics unit (8) captured by a swivel capture unit (18) and the search images (20) are searched for the object (4) and, should the object (4) be identified, the latter is marked as target of the missile (44) in the corresponding search image (20), respectively by an image processing unit (14) .

2. Method according to Claim 1,
   wherein, for the back calculation, the convolution kernel of the point spread function and of the point blurring by the swivelling movement is used and the search image (20) is calculated by inverse convolution with the convolution kernel.

**3.** Method according to Claim 1 or 2,
wherein the swivelling movement during the integration of the recorded image (28) is at least 10% and at most 50% of the image diameter in the swivelling direction (26) .

**4.** Method according to any one of the preceding claims,
wherein the Wiener filter is used in the back calculation.

**5.** Method according to any one of the preceding claims,
wherein noise (42) in the frequency space caused by the optics unit (8) is used as a parameter in the back calculation.

**6.** Method according to any one of the preceding claims,
wherein readout noise (40) caused by the readout electronics (12) of the camera (6) is used as a parameter in the back calculation.

**7.** Method according to any one of the preceding claims,
wherein detector noise (38) in the camera (6) is used as a parameter in the back calculation.

**8.** Method according to any one of the preceding claims,
wherein background noise (36) of the surroundings ascertained from an earlier image recording is used as a parameter in the back calculation.

**9.** Method according to Claim 8,
wherein the background noise (36) is ascertained in a spatially dependent manner by way of a sequence of recorded images (28).

**10.** Apparatus (2) for identifying and marking an object (4) in a search image (20) for controlling a missile (44), comprising

a) a camera (6) that is a constituent part of a seeker head of the missile (44) or of a start-up device of the missile (44), said camera comprising an optics unit (8), a detector (10) and a drive (16) for continuously swivelling the optics unit (8) in the surroundings for completely covering a search space (24) by a sequence of recorded images (28) recorded immediately in succession, in such a way that the optics unit (8) is swivelled in the surroundings during the integration of each recorded image (28),
b) a swivel capture unit (18) and
c) an image processing unit (14) which is prepared to control image recording of a recorded image (28) during driven swivelling of the optics unit (8) and capture the swivelling by means of the swivel capture unit (18) during the image recording of the recorded image (28), and which image processing unit is prepared to back calculate a search image (20) from the recorded image (28) recorded, using the point spread function and using the swivelling movement of the optics unit (8) captured by the swivel capture unit (18), and to search the search image (20) for the object (4) and, should the object (4) be identified, to mark the latter as target of the missile (44) in the search image (20).

**Revendications**

**1.** Procédé de commande d'un missile (44), avec lequel un objet (4) est reconnu dans une image de recherche (20),

a) l'objet (4) et un environnement autour de l'objet (4) étant enregistrés par une optique (8), pouvant pivoter par le biais d'un mécanisme d'entraînement (16), d'une caméra (6) qui fait partie intégrante d'une tête chercheuse du missile (44) ou d'un lanceur du missile (44),
b) un espace de recherche (24) étant entièrement couvert par une séquence d'images enregistrées (28) enregistrées directement les unes après les autres, lesquelles sont enregistrées pendant un pivotement continu de l'optique (8) de telle sorte que l'optique (8) est pivotée dans l'environnement pendant l'intégration de chacune des images enregistrées (28),
c) des images de recherche (20) étant obtenues par calcul inverse à partir des images enregistrées (28) par une unité de traitement d'images (14) en utilisant la fonction d'étalement des points et en utilisant le mouvement de pivotement de l'optique (8) détecté par une unité de détection de pivotement (18), et les images de recherche (20) étant examinées à la recherche de l'objet (4) et, en cas de reconnaissance de l'objet (4), celui-ci étant marqué dans l'image de recherche (20) correspondante en tant que cible du missile (44).

**2.** Procédé selon la revendication 1, le calcul inverse étant effectué en utilisant le noyau de convolution de la fonction d'étalement des points et l'étalement de points par le mouvement de pivotement et l'image de recherche (20) étant calculée par convolution inverse avec le noyau de convolution.

**3.** Procédé selon la revendication 1 ou 2, le mouvement de pivotement pendant l'intégration de l'image enregistrée (28) étant égal à au moins 10 % et au plus 50 % du diamètre de l'image dans la direction du pivotement (26).

**4.** Procédé selon l'une des revendications précédentes, le filtre de Wiener étant utilisé lors du calcul inverse.

**5.** Procédé selon l'une des revendications précédentes, un bruit (42) provoqué par l'optique (8) dans l'espace de fréquences étant utilisé comme paramètre lors du calcul inverse.

**6.** Procédé selon l'une des revendications précédentes, un bruit de lecture (40) provoqué par l'électronique de lecture (12) de la caméra (6) étant utilisé comme paramètre lors du calcul inverse.

**7.** Procédé selon l'une des revendications précédentes, un bruit de détecteur (38) de la caméra (6) étant utilisé comme paramètre lors du calcul inverse.

**8.** Procédé selon l'une des revendications précédentes, un bruit de fond (36) de l'environnement déterminé à partir d'un enregistrement d'image antérieur étant utilisé comme paramètre lors du calcul inverse.

**9.** Procédé selon la revendication 8, un bruit de fond (36) étant déterminé sur une séquence d'images enregistrées (28).

**10.** Dispositif (2) destiné à reconnaître et à marquer un objet (4) dans une image de recherche (20) pour la commande d'un missile (44), comprenant

a) une caméra (6), laquelle fait partie intégrante d'une tête chercheuse du missile (44) ou d'un lanceur du missile (44), possédant une optique (8), un détecteur (10) et un mécanisme d'entraînement (16) servant au pivotement continu de l'optique (8) dans un environnement en vue de couvrir entièrement un espace de recherche (24) par une séquence d'images enregistrées (28) enregistrées directement les unes après les autres, de telle sorte que l'optique (8) est pivotée dans l'environnement pendant l'intégration de chacune des images enregistrées (28),
b) une unité de détection de pivotement (18) et
c) une unité de traitement d'images (14) qui est conçue pour commander une capture d'image d'une image enregistrée (28) pendant le pivotement entraîné de l'optique (8) et détecter le pivotement pendant la capture d'image d'une image enregistrée (28) au moyen de l'unité de détection de pivotement (18), et qui est conçue pour obtenir une image de recherche (20) par calcul inverse à partir de l'image enregistrée (28) enregistrée en utilisant la fonction d'étalement des points et en utilisant le mouvement de pivotement de l'optique (8) détecté par l'unité de détection de pivotement (18), et pour examiner l'image de recherche (20) à la recherche de l'objet (4) et, en cas de reconnaissance de l'objet (4), pour marquer celui-ci dans l'image de recherche (20) en tant que cible du missile (44).

FIG 1

FIG 2

FIG 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 03102505 A1
- EP 2560368 A1
- EP 2466247 A1

**In der Beschreibung aufgeführte Nicht-Patentliteratur**

- **VON NEEL JOSH et al.** Image Deblurring using Inertial Measurement Sensors. *ACM SIGGRAPH CONFERENCE PROCEEDINGS,* 1-8